Europäisches Patentamt

European Patent Office

Office européen des brevets

(11) Veröffentlichungsnummer: **0 319 790**
**A1**

## (12) EUROPÄISCHE PATENTANMELDUNG

(21) Anmeldenummer: 88119632.3

(22) Anmeldetag: 25.11.88

(51) Int. Cl.⁴: **C08G 65/46**

(30) Priorität: 05.12.87 DE 3741274

(43) Veröffentlichungstag der Anmeldung:
14.06.89 Patentblatt 89/24

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Brandt, Hermann, Dr.
Keltenstrasse 30
D-6707 Schifferstadt(DE)
Erfinder: Schwoebel, Gerd
Leininger Strasse 51
D-6719 Wattenheim(DE)
Erfinder: Dreher, Hermann, Dr.
Im Waldwinkel 5
D-6104 Seeheim-Jugenheim 1(DE)
Erfinder: Brandstetter, Franz, Dr.
Ritterbueschel 45
D-6730 Neustadt(DE)
Erfinder: Seiler, Erhard, Dr.
Erpolzheimer Strasse 1
D-6700 Ludwigshafen(DE)
Erfinder: Gausepohl, Hermann, Dr.
Neuweg 10
D-6704 Mutterstadt(DE)
Erfinder: Hambrecht, Juergen, Dr.
Am Klosterwald 31
D-4400 Muenster-Hiltrup(DE)

(54) Verfahren zur Herstellung von Polyhenylenether.

(57) Verfahren zur Herstellung von Polyphenylenether durch oxidative Kupplung von Phenolen zu Polyphenylenethern mit Hilfe von Katalysatorsystemen aus Metallverbindungen und Aminen in organischer Lösung und anschließender Extraktion der Metall- und Aminkomponenten mit wäßrigen Säuren und/oder Komplexbildnern, wobei man die Reaktionsgemische anschließend durch mindestens einen Koaleszierfilter leitet.

EP 0 319 790 A1

## Verfahren zur Herstellung von Polyphenylenether

Die Erfindung betrifft ein Verfahren zur Herstellung von Polyphenylenether durch oxidative Kupplung von Phenolen mit Hilfe von Katalysatorsystemen aus Metallverbindungen und Aminen in organischer Lösung und anschließender Extraktion der Metall- und Aminkomponenten mit wäßrigen Säuren und/oder Komplexbildnern.

Polyphenylenether und Verfahren zu ihrer Herstellung sind allgemein bekannt und vielfach beschrieben, wie beispielsweise in den US-Patentschriften 3 306 874, 3 306 875, 3 639 656, 3 642 699 und 3 661 848.

Die zur Herstellung der Polyphenylenether am häufigsten angewendeten Verfahren umfassen die Selbstkondensation einwertiger Phenole durch Einwirkung von Sauerstoff in Gegenwart von Katalysatoren.

Als Katalysatoren werden bevorzugt Metall-Amin-Komplexe, insbesondere Kupfer-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschieht durch die Verwendung von wäßrigen Lösungen von anorganischen oder organischen Säuren, wie es z.B. in der DE-OS 21 05 372 im Gegenstromextraktionsverfahren vorgenommen wird. Verwendet werden auch Polycarbonsäuren und/oder Polyamincarbonsäuren (vgl. DE-OS 23 64 319) oder andere Chelatisierungsmittel wie Nitrilotriessigsäure und ihre Natriumsalze oder Ethylendiamintetraessigsäure und ihre Natriumsalze (vgl. DE-OS 25 32 477), letztere auch in Kombination mit quaternären Ammoniumsalzen (vgl. US-PS 4 026 870). Beschrieben ist auch die Katalysatorabtrennung mit Hilfe komplexbildender Mittel aus der Gruppe der Bisguanide (vgl. DE-OS 24 60 325). Neben dem Abbrechen der oxidativen Selbstkondensation hat die Zugabe des komplexbildenden Agens auch die möglichst vollständige Entfernung des Metall-Katalysators aus dem Polyphenylenether zum Ziel, da Verunreinigungen des Polymeren durch Metallreste zu einer Verschlechterung des gesamten Eigenschaftsbildes des Polymeren führen. Insbesondere die Oxidationsempfindlichkeit und die Eigenfarbe werden betroffen.

Diese Maßnahmen zur Entfernung von Katalysatorresten haben aber den Nachteil, daß zu einer vollständigen Entfernung (Restmenge des Metallions kleiner als 10 ppm) mehrfache Extraktionsschritte in z.T. komplizierten Trennverfahren angewendet werden müssen. Häufig werden dabei die Eigenschaften des Polyphenylenethers verändert.

In der deutschen Anmeldung Nr. P 36 32 528.7 wird vorgeschlagen, die Katalysatorkomponenten durch Waschen mit Säure, gefolgt von einer Extraktion mit Komplexbildnern, zu entfernen.

In der DE-OS 33 24 338 ist ein Verfahren zur Abtrennung der Katalysatorkomponente beschrieben. Zwar werden durch die geschilderten Verfahren der Kupfergehalt der Lösung auf Werte < 1 ppm abgesenkt. Dies geschieht jedoch im wesentlichen durch Kationenaustausch der Natriumsalze des Komplexierungsmittels, beispielsweise bei der Verwendung der Na-Salze der Ethylendiamintetraessigsäure.

In der DE-OS 32 27 745 wird die Zugabe eines Tensides beschrieben. Zwar wird mit dieser Maßnahme eine günstigere Phasentrennung insbesondere bei höherer konzentrierten Polyphenylenether-Lösungen erreicht. Die im Produkt verbleibenden Tenside können jedoch bei der Aufarbeitung nach dem Totalisolationsverfahren durch Farbverschlechterung des Polyphenylenether hinderlich sein.

Es hat sich gezeigt, daß bei den bekannten Verfahren Polyphenylenether entstehen, deren thermische und mechanische Eigenschaften wie Schlagzähigkeit und Wärmeformbeständigkeit in Verbindung mit ihrem duktilen Verhalten beim Bruch verbesserungsbedürftig sind.

Der Erfindung lag deshalb die Aufgabe zugrunde, ein einfaches Verfahren zur Herstellung von Polyphenylenether mit verbesserten Eigenschaften bereitzustellen.

Demgemäß wurde ein Verfahren zur Herstellung von Polyphenylenether durch oxidative Kupplung von Phenolen mit Hilfe von Katalysatorsystemen aus Metallverbindungen und Aminen in organischer Lösung und anschließender Extraktion der Metall- und Aminkomponenten mit wäßrigen Säuren und oder Komplexbildnern gefunden, das dadurch gekennzeichnet ist, daß man die Reaktionsgemische anschließend durch mindestens einen Koaleszierfilter leitet.

Außerdem wurden spezielle Ausgestaltungen des Verfahrens gemäß der Unteransprüche gefunden.

Unter hochmolekularen Polyphenylenethern werden die durch oxidative Kupplung von 2,6-Dialkylphenol zu einer Kette alkylsubstituierter, in para-Stellung durch ein Sauerstoffatom verbundene Benzolringe verstanden. Die erfindungsgemäßen Polymeren weisen Durchschnittsmolekulargewichte von 10 000 bis 90 000, bevorzugt 20 000 bis 80 000, bestimmt nach der in "Macromolecular Synthesis" 1 (1978), Seite 83 angegebenen Methode, auf.

Hochmolekulare Polyphenylenether, auch Poly(phenylenoxide) genannt, sind seit längerem bekannt (vgl. z.B. US-PS 3 661 848; US-PS 3 219 625 oder US-PS 3 378 505), so daß sich hier eine weitere

2

Beschreibung erübrigt.

Die zur Herstellung der hochmolekularen Polyphenylenether verwendeten einwertigen Phenole, die in den beiden ortho-Stellungen und gegebenenfalls der meta-Position, nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol, 2,6-Diphenylphenol sowie Gemische dieser Phenole.

Zur Ausführung der Polykondensation wird üblicherweise Sauerstoff in die 15 bis 50 °C, insbesondere 15 bis 40 °C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist. Nach bekannten Verfahren wird der Katalysator aus Kupfersalz, vorzugsweise Kupfer-I-bromid, Amin und 0,01 bis 5 Gew.% 2,6-Dimethylphenol in die Vorlage der gelösten Monomeren eindosiert.

Bei dem für die Polykondensation bekannten Katalysatorkomplex handelt es sich üblicherweise um eine Kombination aus einem Amin, z.B. n-Dibutylamin, Diethylamin, Picolin, Chinolin, Pyridinbasen, Triisopropylamin, Dimethylisopropanolamin, Triethanolamin, Triisopropanolamin oder Diisopropanolamin mit einem Kupfersalz wie Kupfer-I-Bromid, Kupfer-I-Chlorid, Kupfer-II-Acetat, Kupfer-II-Propionat, Kupfer-II-Acetessigester oder Kupfer-II-Acetylacetonat. Die Konzentration der Amine kann in der Reaktionsmischung innerhalb weiter Grenzen variieren, zweckmäßig sind jedoch niedrige Konzentrationen. Ein bevorzugter Bereich der Menge der eingesetzten Amine liegt bei 2,0 bis 25 Mol pro 100 Mol des Monomeren. Auch Mischungen der verschiedenen Amine können eingesetzt werden. Die Konzentration der Kupfersalze wird im allgemeinen gering gehalten und variiert beispielsweise von 0,2 bis 2,5 Mol pro 100 Mol des Monomeren.

Der Anteil des Lösungsmittels liegt üblicherweise im Bereich von 1 : 1 bis 20 : 1, d.h. maximal bis zu einem Überschuß des 20fachen am Lösungsmittel, bezogen auf das Monomere.

Als Lösungsmittel werden Benzol, Toluol, Ethylbenzol und aliphatische Kohlenwasserstoffe, insbesondere $C_6$- bis $C_{10}$-Kohlenwasserstoffe, verwendet.

Darüber hinaus kann die Reaktionsmischung einen Aktivator wie ein Diarylguanidin oder ein Diarylformamidin enthalten (vgl. US-PS 3 544 515).

Die Reaktion kann absatzweise, mit Monomerenzulauf oder kontinuierlich durchgeführt werden. Die Reaktion verläuft schnell und ist üblicherweise nach 0,1 bis 3 Stunden beendet.

Wenn das Polymere das gewünschte Molekulargewicht erreicht hat, enthält die Reaktionslösung ca. 1 bis 25 Gew.% Polyphenylenether, ca. 0,005 bis 1,5 Gew.% Metallionen und etwa 0,1 bis 10,0 Gew.% Amin sowie gegebenenfalls geringere Mengen anderer Materialien.

Diese Reaktionsmischungen werden mit wäßrigen Säuren bzw. metallkomplexbildenden Verbindungen gegebenenfalls in Anwesenheit von Tensiden zur Abtrennung der in der Polymerlösung enthaltenen Katalysatorkomponenten behandelt.

Als Komplexierungsmittel werden üblicherweise wäßrige Lösungen der oben genannten Komplex- oder Chelatbildner verwendet. Im allgemeinen ist das komplexbildende Agens in solcher Menge vorhanden, daß auf ein Mol Metallionen im Katalysator 0,5 bis 5 Mol komplexbildendes Agens kommen.

Als Tenside werden üblicherweise nichtionische Verbindungen wie z.B. Blockcopolymere von Alkylenoxiden, Ethylendiaminpolyalkylenglykole und Polyalkylenglykolether von Alkoholen, Phenolen und Fettsäuren, und Gemische der Polyglykolverbindungen in Mengen von 0,1 bis 100 mg/kg bezogen auf die Lösung des Polyphenylenethers verwendet.

Erfindungsgemäß werden diese von den Katalysatorkomponenten gereinigten Reaktionsmischungen durch Koaleszierfilter geleitet. In einer bevorzugten Verfahrensvariante werden die Reaktionsmischungen mit einer Waschflüssigkeit in üblichen Mischaggregaten wie Rührbehältern oder statischen Mischern vermischt. Die Waschflüssigkeit ist üblicherweise nicht oder nur sehr wenig in der Reaktionsmischung löslich, so daß sich 2 Phasen bilden, die je nach der Intensität des Mischens ineinander emulgiert sind. Zur Abscheidung werden beide Phasen im Anschluß daran in einen Koaleszierfilter geleitet, aus dem beide Phasen getrennt entnommen werden. Die Temperatur kann in breiten Bereichen frei gewählt werden. Bevorzugt wird bei Temperaturen zwischen 20 und 90, besonders bevorzugt zwischen 50 und 80 °C gearbeitet.

Vorteilhaft werden mehrere solcher Verfahrensstufen zum Beispiel mit verschiedenen Waschflüssigkeiten kombiniert, wobei dann besonders gute Erfolge erzielt werden, wenn vor den Verfahrensstufen ein Koaleszierfilter zur Grobabtrennung von Wasserresten installiert ist.

Koaleszierfilter sind an sich bekannt aus R. Berger, Chem. Ing. Tech. 58 (1986) 449 und sind im Handel erhältlich. Es handelt sich dabei um engmaschige Filter mit einem Auffangbehälter zur Phasentrennung, wobei die Filterpackungen Porendurchmesser in ähnlicher Größenordnung wie die Tropfengröße der zu koaleszierenden Emulsion haben, also etwa von 0,5 bis 10 μm.

Als Packungen kommen Vliese, Vliesstoffe oder Faservliese aus z.B. Zellstoff, Metall-, Glas- oder

3

Cellulosefasern in Frage, wie sie in Ullmanns Encyclopädie der technischen Chemie, Band 23, 1983, S. 729 bis 745 beschrieben sind. Bevorzugt werden Gemische aus Cellulosefasern und Glasfasern.

Das Reaktionsgemisch, gegebenenfalls vermischt mit der Waschflüssigkeit, wird durch die Filterpakkung in den Auffangbehälter des Koaleszierfilters geleitet, aus dem die spezifisch leichtere Phase oben und die schwerere unten entnommen wird.

Die Menge an Waschflüssigkeit ist unkritisch. Man kann 0,5 bis 10, bevorzugt 1 bis 5 Gew.%, bezogen auf die eingesetzte Reaktionsmischung, verwenden.

Die Kontaktzeiten der Phasen können zwischen 0,5 und 40 min, bevorzugt zwischen 2 und 10 min betragen. Es wird im allgemeinen bei Atmosphärendruck oder bei geringem Überdruck gearbeitet.

Als Waschflüssigkeit kommen wäßrige Lösungen von Säuren, wie Salzsäure, Schwefelsäure, schweflige Säure, Phosphorsäure, Salpetersäure, salpetrige Säure oder Kohlensäure in Frage. Bevorzugt werden wäßrige Lösungen von organischen Mono- oder Dicarbonsäuren mit 1 bis 20 C-Atomen, insbesondere Ameisensäure, Essigsäure, Propionsäure oder Oxalsäure, die ihrerseits substituiert sein können.

Der Einsatz von Carbonsäuren hat zudem den Vorteil, daß die noch in der Polymerlösung verbliebenen Reste der Aminkomponente des Katalysatorkomplexes in eine wasserlösliche Form überführt und so mit der Waschlösung nahezu vollständig entfernt werden können. Diese Maßnahme führt insbesondere bei der Anwendung von Totalisolationsverfahren als Aufarbeitungsstufe zur Vermeidung von Geruchsproblemen bei der Aufarbeitung.

Dicarbonsäuren werden vorteilhafterweise eingesetzt, da sie in einigen Fällen mit dem eingesetzten Polyphenylenether reagieren können. Die Reaktionsprodukte können als Verträglichkeitsvermittler in Polymermischungen dienen.

Die Konzentration der Säuren ist im allgemeinen unkritisch. Sie hängt, was sich jedoch von selbst versteht, im wesentlichen von der Wasserlöslichkeit ab. Die Säuren werden üblicherweise in Mengen von 1 bis 80, bevorzugt 4 bis 45, insbesondere 10 bis 25 Gew.%, bezogen auf die Waschflüssigkeit, verwendet.

Daneben kann als Waschflüssigkeit auch Wasser verwendet werden. In der Waschflüssigkeit können gegebenenfalls reduzierende Zusätze wie Ascorbinsäure, Natriumsulfit, Natriumdisulfit, Natriumdithionit, Eisen-II-sulfat, Hydrazin oder Zinn-II-chlorid und/oder Substanzen wie Chinone, ein- oder zweiwertige Phenole oder deren Ether in Mengen bis zu 10 Gew.%, bezogen auf die Waschflüssigkeit, enthalten sein.

Bei Verwendung von Carbonsäuren hat es sich als vorteilhaft erwiesen, die resultierende gereinigte Reaktionsmischung in einer zweiten Verfahrensstufe mit einer weiteren Waschflüssigkeit, insbesondere Wasser, zu behandeln. In einem solchen mehrstufigen Verfahren lassen sich in der ersten Verfahrensstufe höhere Konzentrationen an Carbonsäure, wie von 5 bis 80, insbesondere 5 bis 10 Gew.%, einsetzen. In der zusätzlichen Verfahrensstufe können durch eine Wasserwäsche Säurereste, die unter Umständen bei der Langzeitanwendung zu frühzeitigem Materialverschleiß an Apparateteilen führen könnten, vollständig entfernt werden.

Es hat sich in der Praxis manchmal als günstig erwiesen, nach den Verfahrensstufen der Polymerlösung weitere Additive hinzusetzen. So ist nach den Verfahrensstufen die Beimischung von hydrolyseempfindlichen stabilisierenden Additiven wie Trisnonylphosphat, sterisch gehinderten Aminen oder phenolischen Antioxidantien unkritisch.

Ein bevorzugter Aspekt des vorliegenden Verfahrens ist die Herstellung von Polyphenylenether mit hoher Schlagzähigkeit und Wärmeformbeständigkeit, gepaart mit vorteilhaftem duktilen Verhalten beim Bruch, der nach sog. Totalisolationsverfahren, z.B. durch Sprühtrocknung, Dampfausfällung, Heißwasserzerkrümelung oder Extruderentgasung gewonnen werden kann. Die Erfindung erleichtert die wirtschaftliche Anwendung solcher Verfahren, die hinsichtlich der erforderlichen Energie, der Lösungsmittelverluste und dgl. wirtschaftlicher sind als die bekannten Ausfällungsverfahren.

Überraschenderweise besitzen die Polyphenylenether eine gute Oxidationsbeständigkeit, obwohl wasserlösliche stabilisierende Zusätze wie Ascorbinsäure oder Natriumhydrogensulfit extrahiert werden, wenn mit einer Waschflüssigkeit gearbeitet wird.


Beispiel und Vergleichsversuch


Eine Vorlage von 1,3 Gew.-Teilen Cu-I-Bromid und 20 Gew.-Teilen 1,4-Dimethylpentylamin und 2 Gew.-Teilen 2,6-Dimethylphenol (=DMP) wurde bei 20° C 5 Minuten unter Einleiten von Sauerstoff gerührt. Dann wurde im Verlauf von 30 Minuten eine Lösung von 204 Gew.-Teilen DMP in 1200 Gew.-Teilen Toluol eindosiert. Anschließend wurde noch 1 Stunde bei 20° C gerührt. Die Reaktion wurde in Gegenwart von 43 Gew.-Teilen Sauerstoff pro Stunde durchgeführt. Zur Reinigung der Polymerlösung wurden 8 Gew.-Teile des Dinatriumsalzes der Ethylendiamintetraessigsäure hinzugegeben und eine Stunde bei 40° C durch Rühren eingemischt. Danach wurden organische und wäßrige Phase in einem Absetzbehälter bei Raumtemperatur getrennt. Die organische Phase wurde durch Zugabe von 25 Gew.-Teilen einer 10 gew.%igen Ascorbinsäurelösung und starkes Rühren während 5 Minuten bei 75°C stabilisiert. Nach Trennung von organischer und wäßriger Phase in einem Absetzbehälter bei Raumtemperatur wurde die organische Phase entnommen. Sie wird im folgenden als Ausgangsmischung bezeichnet.

Die Ausgangsmischung wurde durch einen Koaleszierfilter geleitet und die sich im Auffangbehälter des Koaleszierfilters sammelnde wäßrige Phase abgetrennt. In die resultierende organische Phase wurde 1,5 Gew.%, bezogen auf die organische Phase, Wasser dosiert. Diese Mischung wurde erneut durch ein Koaleszierfilter geleitet und die sich im Auffangbehälter sammelnde wäßrige Phase abgetrennt. Es wurde bei 60°C gearbeitet.

Die organische Phase wurde durch Extruderentgasung aufgearbeitet. Der Polyphenylenether wurde mit schlagfestem Polystyrol (8 Gew.% Polybutadiengehalt) im Gewichtsverhältnis 6 : 4 wie üblich abgemischt.

An bei 280°C spritzgegossenen Testkörpern wurden die Kerbschlagzähigkeit nach DIN 53 453, die Vicat-Erweichungstemperatur nach DIN 53 460 und die Durchstoßarbeit als Maß für das duktile Verhalten beim Bruch nach DIN 53 443 gemessen. Die Ergebnisse sind in der Tabelle zusammengefaßt.

Zum Vergleich wurde die Ausgangsmischung wie beschrieben aufgearbeitet, mit schlagfestem Polystyrol vermischt und getestet.

Die Ergebnisse in der Tabelle belegen die Überlegenheit von Polyphenylenethern, die nach dem erfindungsgemäßen Verfahren behandelt wurden.

Tabelle

| | Beispiel | Vergleichsversuch |
|---|---|---|
| Kerbschlagzähigkeit $a_k$ [kJ/m²] | 12.3 | 10.2 |
| Vicattemperatur [°C] | 151 | 146 |
| Durchstoßarbeit [Nm] | 60 | 52 |

## Ansprüche

1. Verfahren zur Herstellung von Polyphenylenether durch oxidative Kupplung von Phenolen mit Hilfe von Katalysatorsystemen aus Metallverbindungen und Aminen in organischer Lösung und anschließender Extraktion der Metall- und Aminkomponenten mit wäßrigen Säuren und/oder Komplexbildnern, dadurch gekennzeichnet, daß man die Reaktionsgemische anschließend durch mindestens einen Koaleszierfilter leitet.

2. Verfahren nach Anspruch 1, dadurch gekennzeichnet, daß man die Reaktionsgemische im Anschluß an die Extraktion in mindestens einer Verfahrensstufe zunächst mit einer Waschflüssigkeit vermischt und dann durch mindestens einen Koaleszierfilter leitet.

3. Verfahren nach Anspruch 2, dadurch gekennzeichnet, daß man die Waschflüssigkeit in einer Menge von 0,5 bis 10 Gew.%, bezogen auf das eingesetzte Reaktionsgemisch, verwendet.

4. Verfahren nach nach mindestens einem der Ansprüche 2 oder 3, dadurch gekennzeichnet, daß die Waschflüssigkeit Wasser ist.

5. Verfahren nach mindestens einem der Ansprüche 2 oder 3, dadurch gekennzeichnet, daß die Waschflüssigkeit eine 1 bis 20 Gew.%ige wäßrige Lösung einer organischen Carbonsäure oder Dicarbonsäure ist.

6. Verfahren nach mindestens einem der Ansprüche 2 bis 5, dadurch gekennzeichnet, daß man in zwei Verfahrensstufen arbeitet und in der ersten Verfahrensstufe als Waschflüssigkeit eine 1 bis 20 Gew.%ige wäßrige Lösung einer Carbonsäure und in der zweiten Verfahrensstufe als Waschflüssigkeit Wasser einsetzt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| A,D | EP-A-0 131 243 (BASF) <br> * Seite 4, Zeile 41-Seite 5, Zeile 17; Anspruch 1 *; & DE - A 33 24338 (Kat. D) <br> ---- | 1 | C 08 G 65/46 |
| A | EP-A-0 100 048 (BASF) <br> * Patentanspruch *; & DE - A - 32 27745 (Kat. D) <br> ---- | 1 | |
| A,P | EP-A-0 262 528 (BASF) <br> * Spalte 5, Zeilen 1-38; Ansprüche *; & DE - A - 36 32528 (Kat. D) <br> ---- | 1,5 | |
| A,D | CHEMIE-INGENIEUR-TECHNIK <br> Band 58, Nr. 6, 1986, Seiten 449-456,Weinheim, D; R. BERGER:"Koaleszenzprobleme in chemischen Prozessen". <br> ---- | 1 | |
| A | EP-A-0 116 442 (BORG-WARNER) <br> * Ansprüche * <br> ---- | 1 | RECHERCHIERTE · SACHGEBIETE (Int. Cl.3) |
| A | EP-A-0 187 564 (SOFRANCE) <br> * Ansprüche; Seite 1, Zeilen 1-15 * <br> ----- | 1 | C 08 G 65/00 |

Der vorliegende Recherchenbericht wurde für alle Patentansprüche erstellt

| Recherchenort | Abschlußdatum der Recherche | Prüfer |
|---|---|---|
| BERLIN | 22-02-1989 | BOEKER R.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)